(19) **Europäisches Patentamt / European Patent Office / Office européen des brevets**

(11) **EP 2 320 309 B1**

(12) **EUROPEAN PATENT SPECIFICATION**

(45) Date of publication and mention
of the grant of the patent:
**12.02.2014 Bulletin 2014/07**

(51) Int Cl.:
***G06F 3/041*** *(2006.01)*

(21) Application number: **09172901.2**

(22) Date of filing: **13.10.2009**

(54) **Portable electronic device including touch-sensitive display and method of controlling same**

Tragbare elektronische Vorrichtung mit berührungsempfindlicher Anzeige und Verfahren zu deren Steuerung

Dispositif électronique portable incluant un écran tactile et son procédé de commande

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**11.05.2011 Bulletin 2011/19**

(73) Proprietor: **BlackBerry Limited
Waterloo, ON N2K 0A7 (CA)**

(72) Inventors:
• **Alamlki, Nazih
Waterloo Ontario N2L 3W8 (CA)**
• **Simmons, Sean Bartholomew
Waterloo Ontario N2L 3W8 (CA)**

(74) Representative: **Fennell, Gareth Charles et al
Kilburn & Strode LLP
20 Red Lion Street
London WC1R 4PJ (GB)**

(56) References cited:
**EP-A2- 0 232 696      WO-A1-02/35461
GB-A- 2 180 342      US-A- 6 028 271**

**Description**

**FIELD OF TECHNOLOGY**

The present disclosure relates to electronic devices including but not limited to portable electronic devices having touch-sensitive displays and their control.

**BACKGROUND**

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

EP 0232 696 discloses the calibration of a force sensing type data input device that includes a force receiving plate mounted over a screen of a cathode ray tube display. The plate is supported by force sensors. The method involves applying a plurality of test forces to the force receiving plate at known predetermined locations, and calculating a location of each applied force based on signals received from each force sensor. The calculated location of each force is compared with the known location of each applied force and the sensitivity of each force sensor is adjusted until differences between the calculated and known locations are minimized.

US 6,028,271 discloses a method for recognizing gestures made by a conductive object on a touch-sensor pad and for cursor motion. Tapping, drags, pushes, extended drags and variable drags gestures are recognized by analyzing the position, pressure, and movement of the conductive object on the sensor pad during the time of a suspected gesture, and signals are sent to a host indicating the occurrence of these gestures. Signals indicating the position of a conductive object and distinguishing between the peripheral portion and an inner portion of the touch-sensor pad are also sent to the host.

WO 02/35461 discloses a method for discriminating against false touches in a touchscreen system. The touchscreen system is designed to confirm a touch registered by one touch sensor with another touch sensor, preferably of a different sensor type, prior to acting upon the touch (i.e., sending touch coordinates to the operating system). If the touch registered by the first touch sensor is not confirmed by the second touch sensor, the touch is invalidated.

In one embodiment the touchscreen system comprises a projective-capacitive sensor array and a plurality of force sensors.

GB 2 180 342 discloses a touch screen or touch keyboard that has a surface provided by a rectangular piece of glass with four piezoelectric transducers attached to the corner regions of the piece of glass. A force applied to the surface will be distributed to the transducers in proportions determined by the location at which said force is applied. Based on signals from the transducers that are correlated to forces sensed at the transducers the location at which the force is applied is determined.

Improvements in devices with touch-sensitive displays are desirable.

**SUMMARY**

According to a first aspect of the invention a method is provided as set forth in claim 1.

According to a second aspect of the invention a computer-readable medium is provided having computer-readable code executable by at least one processor of a portable electronic device to perform the above method.

According to a third aspect of the invention an electronic device is provided as set forth in claim 17.

**BRIEF DESCRIPTION OF THE DRAWINGS**

FIG. 1 is a block diagram of a portable electronic device in accordance with the present disclosure.

FIG. 2A is a front view of an example of a portable electronic device in accordance with the present disclosure.

FIG. 2B is a sectional side view of the portable electronic device through the line 202 of FIG 2, in accordance with the present disclosure.

FIG. 3 is a functional block diagram showing components of the portable electronic device in accordance with the present disclosure.

FIG. 4 illustrates an example of a touch on a touch-sensitive display in accordance with the present disclosure.

FIG. 5 is a flowchart illustrating a method of controlling an electronic device in accordance with the present disclosure.

## DETAILED DESCRIPTION

The following describes an electronic device and method of controlling the electronic device. The method includes receiving signals from force-sensing resistors, detecting a touch on a touch-sensitive display and determining a location of the touch, receiving, from force-sensing resistors, signals related to the touch, and calibrating the force-sensing resistors by adjusting the gain for a first force-sensing resistor, of the force-sensing resistors, based on at least the signals and the location of the touch.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

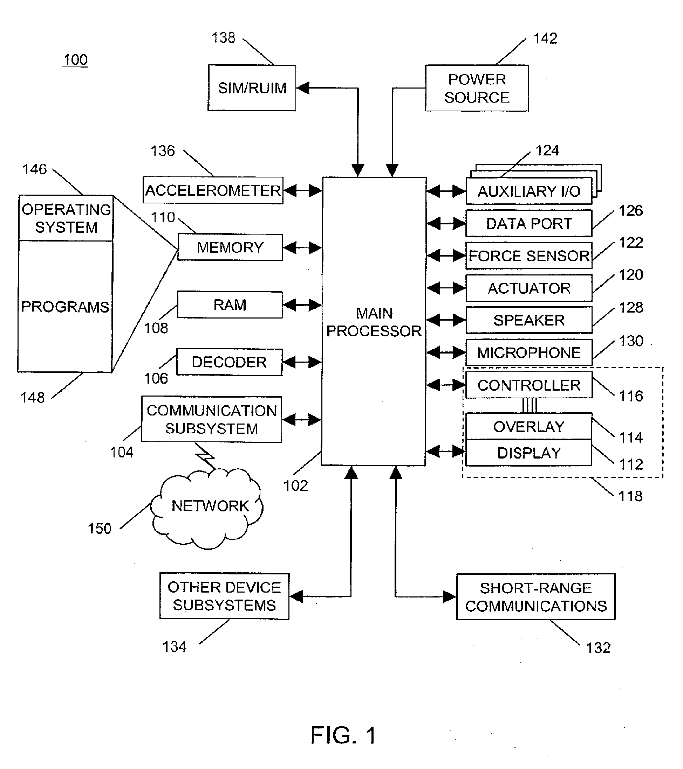

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/0 subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data Items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118 and processed by the controller 116, for example, to determine a location of a touch. Touch location data may include a single point of contact, such as a point at or near a center of the area of contact, or the entire area of contact for further processing. The location of a touch detected on the touch-sensitive display 118 may include x and y components, e.g., horizontal and vertical with respect to one's view of the touch-sensitive display 118, respectively. For example, the x component may be determined by a signal generated from one touch sensor layer, and the y component may be determined by a signal generated from another touch sensor layer. A signal is provided to the controller 116 in response to detection of a suitable object, such as a finger, thumb, or other items, for example, a stylus, pen, or other pointer, depending on the nature of the touch-sensitive display 118. More than one simultaneous location of contact may occur and be detected.

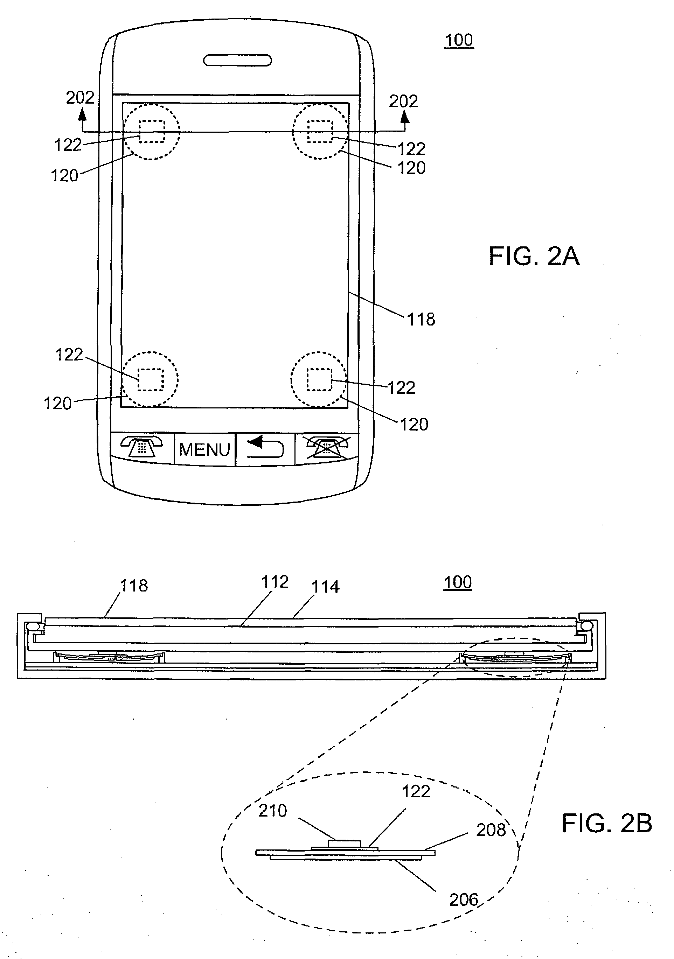

The actuator 120 may comprise one or more piezoelectric (piezo) actuators that provide tactile feedback. FIG. 2A is front view of an example of a portable electronic device 100. In the example shown in FIG. 2A, the actuator 120 comprises four piezo actuators 120, each located near a respective corner of the touch-sensitive display 118. FIG. 2B is a sectional side view of the portable electronic device 100 through the line 202 of FIG 2A. Each piezo actuator 120 is supported within the portable electronic device 100 such that contraction of the piezo actuators 120 applies a force against the touch-sensitive display 118, opposing a force externally applied to the display 118. Each piezo actuator 120 includes a piezoelectric device, such as a piezoelectric ceramic disk 206, referred to as a piezoelectric disk 206 herein, adhered to a metal substrate 208. An element 210 that is advantageously at least partially flexible and comprises, for example, hard rubber may be located between the disk 206 and the touch-sensitive display 118. The element 210 does not substantially dampen the force applied to or on the touch-sensitive display 118. In the present example, four force sensors 122 are utilized, with each force sensor 122 located between an element 210 and the metal substrate 208. The metal substrate 208 bends when the piezoelectric disk 206 contracts diametrically due to build up of charge at the piezoelectric disk 206 or in response to an external force applied to the touch-sensitive display 118. The charge may be adjusted by varying the applied voltage or current, thereby controlling the force applied by the piezo actuators 120 on the touch-sensitive display 118. The charge on the piezo actuators 120 may be removed by a controlled discharge current that causes the piezoelectric disk 206 to expand diametrically, decreasing the force applied by the piezo actuators 120 on the touch-sensitive display 118. Absent an external force applied to the overlay 114 and absent a charge on the piezoelectric disk 206, the piezo actuator 120 may be slightly bent due to a mechanical preload.

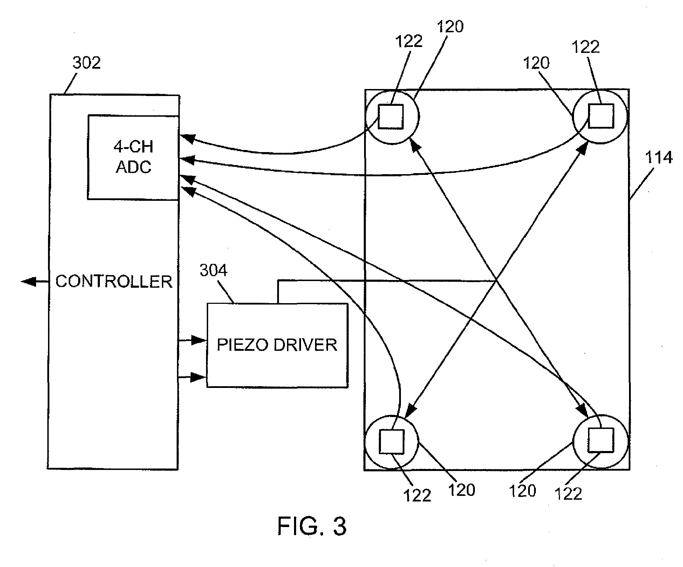

FIG. 3 shows a functional block diagram of components of the portable electronic device 100. In this example, each force sensor 122 is connected to a controller 302, which includes an amplifier and analog-to-digital converter (ADC). The force sensors 122 are force-sensing resistors in an electrical circuit and therefore the resistance changes with force applied to the force sensors 122. As applied force on the touch-sensitive display 118 increases, the resistance decreases. This change is determined via the controller 116 for each of the force sensors 122.

The piezo actuators 120 are connected to a piezo driver 304 that communicates with the controller 302. The controller 302 is also in communication with the main processor 102 of the portable electronic device 10 and may receive and provide signals to the main processor 102. The piezo driver 304 may optionally be embodied in drive circuitry between the controller 302 and the piezoelectric disks 312. The controller 302 controls the piezo driver 304 that controls the current to the piezoelectric disks 206 and thus controls the charge and the force applied by the piezo actuators 120 on the touch-sensitive display 118. Each of the piezoelectric disks 206 may be controlled substantially equally and concurrently. Optionally, the piezoelectric disks 206 may be controlled separately. In the example described below, collapse and release of a dome switch is simulated. Other switches, actuators, keys, and so forth may be simulated, or a non-simulated tactile feedback may be provided. When an applied force, on the touch-sensitive display 118, exceeds a threshold, the charge at the piezo actuators 120 is modulated to impart a force on the touch-sensitive display to simulate collapse of a dome switch. When the applied force, on the touch-sensitive display 118 falls below a low threshold, after actuation of the piezo actuators 120, the charge at the piezo actuators 120 is modulated to impart a force, by the piezo actuators 120, to simulate release of a dome switch.

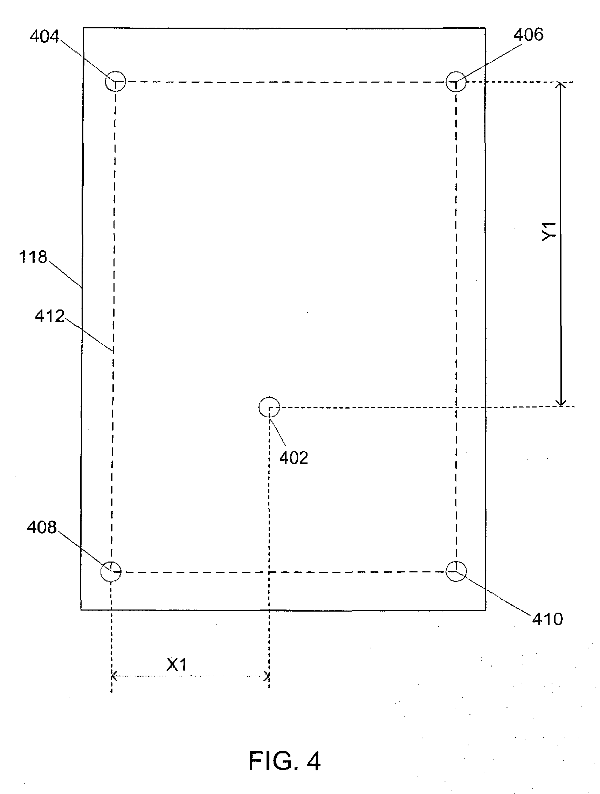

An example of a touch on a touch-sensitive display 118 is illustrated in FIG. 4. The touch 402 is received and detected by the touch-sensitive display 118. The location of the touch 402 is determined. The location of the force sensors 122, at the positions 404, 406, 408, 410, relative to the touch-sensitive display 118, is known. The resistance value that is correlated to a force at each of the force sensors 122 is determined from signals from the force sensors 122. Based on the location of the force sensors 122 and the location of the touch, the x component of the distance of the touch 402 from force sensors 122, X1, is determined and the y component of the distance of the touch 402 from the force sensors 122, Y1, is determined. Each of the force sensors 122 is located near, but spaced from, a respective corner of the touch-sensitive display 118 and an area 412 is determined based on the location of each force sensor 122, with each force sensor 122 located at a corner of the area 412. In this example, the area 412 is a rectangular area on the touch-sensitive display 118. Based on the received signals from each of the force sensors 122 and the location of the touch 402, the force sensors 122 are calibrated by adjusting respective gains.

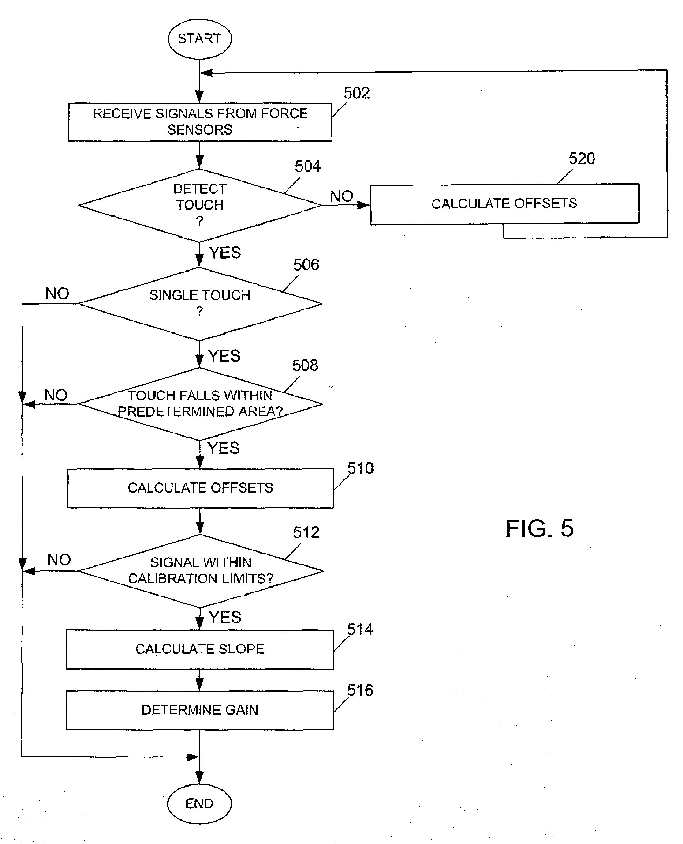

A flowchart illustrating a method of controlling an electronic device is shown in FIG. 5. The method is advantageously performed by the processor 102 and the controller 302 performing stored instructions from a computer-readable medium. Coding of software for carrying out such a method is within the scope of a person of ordinary skill in the art given the present description. The resistance value at each of the force sensors 122 are determined 502 based on signals from the force sensors 122. When a touch is detected 504, the location of touch on the touch-sensitive display 118 is determined. When multiple touches are detected at 506, the process ends.

When a single touch is detected at 506, a determination is made 508 whether or not the touch falls within the rectangular area 412 that is determined based on the location of the force sensors 122. When a touch falls outside this area 412, i.e., near an edge of the touch-sensitive display 118, the process ends.

When the touch falls within the rectangular area 412, new offsets are calculated 510 for each force sensor 122. To calculate the new offsets, the resistance value from each of the force sensors 122 is compared to the previous offset. When the resistance measurement at a force sensor 122 is less than the previous offset for that force sensor, the offset is determined as:

$$Offset_{n_i} = (1 - Offset\_Attack) * Offset_{n-1_i} + Offset\_Attack * FSR_i,$$

and
when the resistance value at the force sensor is greater than or equal to the previous offset for that force sensor, the offset is determined as:

$$Offset_{n_i} = (1 - Offset\_Decay) * offset_{n-1_i} + Offset\_Decay * FSR_i,$$

where:

Offset is the new offset for the force sensor i;

$Offset_{n-1_i}$ is the last offset for the force sensor i;

Offset_Attack is a value that is less than one and that determines the responsiveness to change when there is a decrease in the offset;

Offset_Decay is a value that is less than one and that determines the responsiveness to change when there is an increase in offset; $FSR_i$ is the resistance value determined for the force sensor i;

Offset_Attack and Offset_Decay values may be preset. The greater the Offset_Attack, the greater the change in the offset when the offset is decreased. The greater the Offset_Decay, the greater the change in the offset when the offset is increased. The Offset_Attack and Offset_Decay values may be different. For example, the Offset_Decay value may be less than the Offset_Attack value to quickly compensate for a reduction in the offset value while making a smaller adjustment to compensate for increases in the offset value that may be due to applied force.

A determination is made 512 whether the resistance value that is used to determine a force at each of the force sensors 122 is within calibration limits, which may include a low threshold number and a high threshold number. The calibration limits are utilized to determine if the force at each of the force sensors 122 is within a range in which resistance may be reliably correlated with the applied force, depending on the limitations of the force sensors 122. For example, when the resistance at any one of the force sensors 122 is above a high threshold, the force determined may not be accurate as the force sensor 122 may be outside of a range at which force may be reliably determined and the process ends.

When a resistance value is within the calibration limits at 512, a new gain slope is calculated 514 based on the location of touch on the touch-sensitive display 118, the resistance values received from the force sensors 122 and the offset. The new gain slope is determined by:

$$NewSlope_i = TotalForce * DistMatrix[i]/(FSRi - Offset_{ni}),$$

where:

NewSlope is the new gain slope for the force sensor i;

totalForce is the sum of the resistance values received from the force sensors;

Offset$_{ni}$ is the new offset for the force sensor i;

FSR$_i$ is the raw resistance value determined for the force sensor i; and

DistMatrix[i] is the ith element of the DistMatrix, which is the element of DistMatrix that corresponds to the force sensor i;

DistMatrix is a force distribution vector matrix determined by:

$$DistMatrix = \begin{bmatrix} (SSX - X1)*(SSY - Y1) \\ X1*(SSY - Y1) \\ (SSX - X1)*Y1 \\ X1*Y1 \end{bmatrix}/(SSX*SSY),$$

where:

SSX is the x-axis spacing between the force sensors; and

SSY is the y-axis spacing between the force sensors;

X1 is the x component of the distance of the touch from force sensors; and

Y1 is the y component of the distance of the touch from the force sensors.

The gain for each force sensor is determined 516 based on the new gain slope and the offset by:

$$Gain_{ni} = (1 - GainAttack)*Gain_{n-1i} + GainAttack * NewSlope_i,$$

where:

Gain$_{ni}$ is the new gain for the force sensor i;

Gain$_{n-1i}$ is the last gain for the force sensor i; and

GainAttack is a value that is less than one and that determines the responsiveness to change in the gain value.

When a touch is not detected 504 on the touch-sensitive display 118, the new offsets are calculated 520 for each force sensor 122 and process continues at 502.

The force at each of the force sensors may be determined utilizing the new gain and offset values as

$$Force_i = Gain_i(FSR_i)*(FSR_i - Offset_i),$$

where $Force_i$ is the force determined at the force sensor i.

The force at the touch may be determined by summing the forces at each of the force sensors 122.

The force sensors are calibrated to determine a substantially equal force at each force sensor 122 when an equivalent force is received at the force sensors 122. The offsets are updated when a touch is detected and when no touch is detected. The gains are updated only when a touch is detected. The calibration process facilitates force measurement as adjustments are made over time. The adjustments help to compensate for changes in resistance values that occur with time, temperature and humidity using force-sensing resistors. The process described may be carried out during use of the portable electronic device and a separate calibration routine is not necessary. Instead, the process may be carried out when any touch is received on the touch-sensitive display of the portable electronic device to increase accuracy of force measurement.

The present disclosure may be embodied in other specific forms without departing from its essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

**Claims**

1. A method comprising:

   detecting a touch on a touch-sensitive display (118) and determining a location of the touch based on touch sensor data from the touch-sensitive display (118);
   receiving, from force-sensing resistors (122) operably coupled to the touch-sensitive display (118) for sensing a force applied to the touch-sensitive display (118), signals related to the touch, wherein the signals are correlated to forces sensed at the force-sensing resistors (122);
   calibrating a first force sensing resistor of the force-sensing resistors (122) by adjusting a gain for the first force-sensing resistor based on the location of the touch and the signals.

2. The method according to claim 1, wherein calibrating comprises calibrating the first force-sensing resistor by adjusting the gain for the first force-sensing resistor based on the location of the touch, the signals, and an offset for the first force-sensing resistor.

3. The method according to claim 2, wherein the offset is determined based on a responsiveness to change of the offset.

4. The method according to claim 3, wherein the responsiveness to change of the offset differs for an increase in the offset and for a decrease in the offset.

5. The method according to claim 1, wherein the gain is determined based on a responsiveness to change of the gain.

6. The method according to claim 2, wherein adjusting the gain for the first force-sensing resistor comprises, determining a value by multiplying a sum of resistance values from the force-sensing resistors (122) by an element of a force distribution vector corresponding to the first force-sensing resistor, determined based on the location of the touch and locations of the force-sensing resistors (122), and dividing by a difference between a resistance for the first force-sensing resistor and the offset for the first force-sensing resistor.

7. The method according to claim 6, wherein adjusting the gain comprises adjusting the gain based on a previously determined gain, the value, and a responsiveness to change of gain.

8. The method according to claim 1, comprising determining if the location of the touch is within an area (412) on the touch-sensitive display (118) that is determined based on locations of the force-sensing resistors (122) and wherein calibrating is carried out when the touch is located within the area (412).

**9.** The method according to claim 8, wherein determining if the location of the touch is within the area (412) comprises determining when the location of the touch is within a rectangular area, corners of the rectangle located at four of the force-sensing resistors (122).

**10.** The method according to claim 1, comprising determining if the signals are below a threshold and wherein calibrating is carried out when the signals are below the threshold.

**11.** The method according to claim 1, wherein detecting the touch comprises detecting a single touch on the touch-sensitive display (118).

**12.** The method according to claim 1, comprising calibrating an offset when a touch is not detected.

**13.** The method according to claim 1, wherein calibrating comprises adjusting the gain for each additional one of the force-sensing resistors (122), based on the signals and the location of the touch.

**14.** The method according to claim 1, wherein calibrating comprises adjusting the gain for each additional one of the force-sensing resistors (122) based on the signals, the location of the touch, and an offset for the respective force-sensing resistor.

**15.** The method according to claim 14, comprising determining a respective force at the force-sensing resistors (122) based on respective gains and offsets.

**16.** A computer-readable medium having computer-readable code executable by at least one processor (102) of a portable electronic device (100) to perform the method according to any one of claims 1 to 15.

**17.** An electronic device (100) comprising:

a touch-sensitive display (118);
a plurality of force-sensing resistors (122) operably coupled to the touch-sensitive display for sensing a force applied to the touch-sensitive display;
a processor (102), operably coupled to the touch-sensitive display (118) and to the force-sensing resistors (122), to determine a location of a touch on the touch-sensitive display (118) based on touch sensor data from the touch-sensitive display (118), receive, from the force-sensing resistors (122), signals related to the touch, wherein the signals are correlated to forces sensed at the force-sensing resistors, and calibrate a first force-sensing resistor of the force-sensing resistors (122) by adjusting a gain for the first force-sensing resistor based on the signals and the location of the touch.

**Patentansprüche**

**1.** Ein Verfahren, das aufweist:

Erfassen einer Berührung auf einer berührungsempfindlichen Anzeige (118) und Bestimmen einer Position der Berührung basierend auf Berührungssensordaten von der berührungsempfindlichen Anzeige (118);
Empfangen, von Krafterfassungswiderständen (122), die betriebsfähig mit der berührungsempfindlichen Anzeige (118) gekoppelt sind zum Erfassen einer Kraft, die auf die berührungsempfindliche Anzeige (118) angewendet wird, von Signalen, die die Berührung betreffen, wobei die Signale mit Kräften korreliert sind, die an den Krafterfassungswiderständen (122) erfasst werden;
Kalibrieren eines ersten Krafterfassungswiderstands der Krafterfassungswiderstände (122) durch Anpassen einer Verstärkung für den ersten Krafterfassungswiderstand basierend auf der Position der Berührung und den Signalen.

**2.** Das Verfahren gemäß Anspruch 1, wobei das Kalibrieren aufweist ein Kalibrieren des ersten Krafterfassungswiderstands durch Anpassen der Verstärkung für den ersten Krafterfassungswiderstand basierend auf der Position der Berührung, den Signalen und einem Offset für den ersten Krafterfassungswiderstand.

**3.** Das Verfahren gemäß Anspruch 2, wobei der Offset basierend auf einer Reaktionsfähigkeit auf eine Änderung des Offsets bestimmt wird.

4. Das Verfahren gemäß Anspruch 3, wobei sich die Reaktionsfähigkeit auf eine Änderung des Offsets für eine Erhöhung des Offsets und eine Verringerung des Offsets unterscheidet.

5. Das Verfahren gemäß Anspruch 1, wobei die Verstärkung basierend auf einer Reaktionsfähigkeit auf eine Änderung der Verstärkung bestimmt wird.

6. Das Verfahren gemäß Anspruch 2, wobei das Anpassen der Verstärkung für den ersten Krafterfassungswiderstand aufweist ein Bestimmen eines Werts durch Multiplizieren einer Summe von Widerstandswerten von den Krafterfassungswiderständen (122) mit einem Element eines Kraftverteilungsvektors entsprechend dem ersten Krafterfassungswiderstand, bestimmt basierend auf der Position der Berührung und Positionen der Krafterfassungswiderstände (122), und Teilen durch eine Differenz zwischen einem Widerstand für den ersten Krafterfassungswiderstand und dem Offset für den ersten Krafterfassungswiderstand.

7. Das Verfahren gemäß Anspruch 6, wobei das Anpassen der Verstärkung ein Anpassen der Verstärkung basierend auf einer zuvor bestimmten Verstärkung, dem Wert und einer Reaktionsfähigkeit auf eine Änderung der Verstärkung aufweist.

8. Das Verfahren gemäß Anspruch 1, das aufweist ein Bestimmen, ob die Position der Berührung in einem Bereich (412) auf der berührungsempfindlichen Anzeige (118) ist, der basierend auf Positionen der Krafterfassungswiderstände (122) bestimmt wird, und wobei das Kalibrieren ausgeführt wird, wenn sich die Berührung innerhalb des Bereichs (412) befindet.

9. Das Verfahren gemäß Anspruch 8, wobei das Bestimmen, ob die Position der Berührung in dem Bereich (412) ist, aufweist ein Bestimmen, wenn die Position der Berührung in einem rechteckigen Bereich ist, wobei Ecken des Rechtecks an vier der Krafterfassungswiderstände (122) angeordnet sind.

10. Das Verfahren gemäß Anspruch 1, das ein Bestimmen aufweist, ob die Signale unter einer Schwelle sind, und wobei das Kalibrieren ausgeführt wird, wenn die Signale unter der Schwelle sind.

11. Das Verfahren gemäß Anspruch 1, wobei das Erfassen des Berührung ein Erfassen einer einzelnen Berührung auf der berührungsempfindlichen Anzeige (118) aufweist.

12. Das Verfahren gemäß Anspruch 1, das ein Kalibrieren eines Offsets aufweist, wenn keine Berührung erfasst wird.

13. Das Verfahren gemäß Anspruch 1, wobei das Kalibrieren aufweist ein Anpassen der Verstärkung für jeden zusätzlichen der Krafterfassungswiderstände (122) basierend auf den Signalen und der Position der Berührung.

14. Das Verfahren gemäß Anspruch 1, wobei das Kalibrieren aufweist ein Anpassen der Verstärkung für jeden zusätzlichen der Krafterfassungswiderstände (122) basierend auf den Signalen, der Position der Berührung und einem Offset für den jeweiligen Krafterfassungswiderstand.

15. Das Verfahren gemäß Anspruch 14, das ein Bestimmen einer jeweiligen Kraft an den Krafterfassungswiderständen (122) basierend auf jeweiligen Verstärkungen und Offsets aufweist.

16. Ein computerlesbares Medium mit computerlesbarem Code, der durch zumindest einen Prozessor (102) einer tragbaren elektronischen Vorrichtung (100) ausführbar ist, um das Verfahren gemäß einem der Ansprüche 1 bis 15 auszuführen.

17. Eine elektronische Vorrichtung (100), die aufweist:

eine berührungsempfindliche Anzeige (118);
eine Vielzahl von Krafterfassungswiderständen (122), die betriebsfähig mit der berührungsempfindlichen Anzeige gekoppelt sind zum Erfassen einer Kraft, die auf die berührungsempfindliche Anzeige angewendet wird;
einen Prozessor (102), der betriebsfähig mit der berührungsempfindlichen Anzeige (118) und den Krafterfassungswiderständen (122) gekoppelt ist, zum Bestimmen einer Position einer Berührung auf der berührungsempfindlichen Anzeige (118) basierend auf Berührungssensordaten von der berührungsempfindlichen Anzeige (118), Empfangen, von den Krafterfassungswiderständen (122), von Signalen, die die Berührung betreffen, wobei die Signale mit Kräften korreliert sind, die an den Krafterfassungswiderständen erfasst werden, und Kalibrieren eines ersten Krafterfassungswiderstands der Krafterfassungswiderstände (122) durch Anpassen einer Verstärkung für den ersten Krafterfassungswiderstand basierend auf den Signalen und der Position der Berührung.

**Revendications**

1. Procédé comprenant les étapes consistant à :

   détecter un toucher sur un écran d'affichage tactile (118) et déterminer une position du toucher à partir de données de capteurs tactiles qui proviennent de l'écran d'affichage tactile (118) ;
   recevoir des signaux relatifs au toucher en provenance de résistances de détection de forces (122) couplées de manière fonctionnelle à l'écran d'affichage tactile (118) afin de détecter une force appliquée à l'écran d'affichage tactile (118), les signaux étant corrélés à des forces détectées par les résistances de détection de forces (122) ;
   étalonner une première résistance de détection de force parmi les résistances de détection de forces (122), en ajustant un gain de la première résistance de détection de force en fonction de la position du toucher et des signaux.

2. Procédé selon la revendication 1, dans lequel l'étape d'étalonnage comprend l'étape consistant à étalonner la première résistance de détection de force en ajustant un gain de la première résistance de détection de force en fonction de la position du toucher, des signaux et d'un décalage de la première résistance de détection de force.

3. Procédé selon la revendication 2, dans lequel le décalage est déterminé en fonction d'une réponse au changement du décalage.

4. Procédé selon la revendication 3, dans lequel la réponse au changement du décalage diffère d'une augmentation du décalage et d'une diminution du décalage.

5. Procédé selon la revendication 1, dans lequel le gain est déterminé en fonction d'une réponse au changement du gain.

6. Procédé selon la revendication 2, dans lequel l'étape d'ajustement du gain de la première résistance de détection de force comprend l'étape consistant à déterminer une valeur en multipliant une somme de valeurs de résistance provenant des résistances de détection de forces (122) par un élément d'un vecteur de distribution de forces correspondant à la première résistance de détection de force, et déterminée en fonction de la position du toucher et des positions des résistances de détection de forces (122), et en divisant par une différence entre une résistance de la première résistance de détection de force et le décalage de la première résistance de détection de force.

7. Procédé selon la revendication 6, dans lequel l'étape d'ajustement du gain comprend l'étape consistant à ajuster le gain en fonction d'un gain précédemment déterminé, de la valeur et d'une réponse au changement du gain.

8. Procédé selon la revendication 1, comprenant l'étape consistant à déterminer si la position du toucher est comprise dans une zone (412) de l'écran d'affichage tactile (118) qui est déterminée en fonction des positions des résistances de détection de forces (122), et dans lequel l'étape d'étalonnage est exécutée lorsque le toucher est situé dans la zone (412).

9. Procédé selon la revendication 8, dans lequel l'étape de détermination de la position du toucher dans la zone (412) comprend l'étape consistant à déterminer le moment où la position du toucher se trouve dans une zone rectangulaire, les coins du rectangle étant situés sur quatre des résistances de détection de forces (122).

10. Procédé selon la revendication 1, comprenant l'étape consistant à déterminer si les signaux sont inférieurs à un seuil, et dans lequel l'étalonnage est effectué lorsque les signaux sont inférieurs au seuil.

11. Procédé selon la revendication 1, dans lequel l'étape de détection du toucher comprend l'étape consistant à détecter un toucher unique sur l'écran d'affichage tactile (118).

12. Procédé selon la revendication 1, comprenant l'étape consistant à étalonner un décalage lorsqu'un toucher n'est pas détecté.

**13.** Procédé selon la revendication 1, dans lequel l'étape d'étalonnage comprend l'étape consistant à ajuster le gain pour chacune des autres résistances parmi les résistances de détection de forces (122), en fonction des signaux et de la position du toucher.

**14.** Procédé selon la revendication 1, dans lequel l'étape d'étalonnage comprend l'étape consistant à ajuster le gain pour chacune des autres résistances parmi les résistances de détection de forces (122), en fonction des signaux, de la position du toucher et d'un décalage de la résistance de détection de force respective.

**15.** Procédé selon la revendication 14, comprenant l'étape consistant à déterminer une force respective sur les résistances de détection de forces (122) en fonction de gains et de décalages respectifs.

**16.** Support lisible par ordinateur portant du code lisible par ordinateur qui peut être exécuté par au moins un processeur (102) d'un dispositif électronique portatif (100) afin d'exécuter un procédé selon l'une quelconque des revendications 1 à 15.

**17.** Dispositif électronique (100) comprenant :

un écran d'affichage tactile (118) ;
une pluralité de résistances de détection de forces (122) couplées de manière fonctionnelle à l'écran d'affichage tactile afin de détecter une force appliquée à l'écran d'affichage tactile ;
un processeur (102) couplé de manière fonctionnelle à l'écran d'affichage tactile (118) et aux résistances de détection de forces (122) afin de déterminer une position d'un toucher sur l'écran d'affichage tactile (118) en fonction des données de capteurs tactiles provenant de l'écran d'affichage tactile (118), de recevoir des signaux relatifs au toucher en provenance des résistances de détection de forces (122), les signaux étant corrélés à des forces détectées par les résistances de détection de forces, et d'étalonner une première résistance de détection de force parmi les résistances de détection de forces (122) en ajustant un gain de la première résistance de détection de force en fonction des signaux et de la position du toucher.

100

138

142

SIM/RUIM

POWER
SOURCE

146

136

OPERATING
SYSTEM

ACCELEROMETER

124

110

AUXILIARY I/O

PROGRAMS

MEMORY

DATA PORT

126

FORCE SENSOR

122

148

108

RAM

ACTUATOR

120

SPEAKER

128

106

DECODER

MAIN
PROCESSOR

MICROPHONE

130

CONTROLLER

116

COMMUNICATION
SUBSYSTEM

OVERLAY

114

104

DISPLAY

112

102

118

NETWORK

150

OTHER DEVICE
SUBSYSTEMS

SHORT-RANGE
COMMUNICATIONS

134

132

FIG. 1

**FIG. 2A**

**FIG. 2B**

FIG. 3

FIG. 4

```
                    ( START )
                        │
                        ▼
        ┌───────────────────────────────┐   502
        │  RECEIVE SIGNALS FROM FORCE   │
        │            SENSORS            │
        └───────────────────────────────┘
                        │
                        ▼                        520
                     ◇ 504                ┌──────────────────────────┐
                    DETECT      NO        │                          │
                    TOUCH  ─────────────▶ │    CALCULATE OFFSETS     │
                      ?                   │                          │
                     ◇                    └──────────────────────────┘
                        │ YES
                        ▼            506
          NO         ◇
       ◀──────    SINGLE TOUCH
                       ?
                     ◇
                        │ YES
                        ▼            508
          NO         ◇ TOUCH FALLS WITHIN
       ◀──────    PREDETERMINED AREA?
                     ◇
                        │ YES
                        ▼
        ┌───────────────────────────────┐   510
        │      CALCULATE OFFSETS        │
        └───────────────────────────────┘
                        │
                        ▼            512
          NO         ◇ SIGNAL WITHIN
       ◀──────    CALIBRATION LIMITS?
                     ◇
                        │ YES
                        ▼
        ┌───────────────────────────────┐   514
        │        CALCULATE SLOPE        │
        └───────────────────────────────┘
                        │
                        ▼
        ┌───────────────────────────────┐   516
        │        DETERMINE GAIN         │
        └───────────────────────────────┘
                        │
                        ▼
                     ( END )
```

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0232696 A
- US 6028271 A
- WO 0235461 A
- GB 2180342 A